# EUROPEAN PATENT SPECIFICATION

(11) **EP 2 055 173 B1**
(45) Date of publication and mention of the grant of the patent: **15.03.2017**
(21) Application number: 08167447.5
(22) Date of filing: 23.10.2008
(51) Int. Cl.: A01D 41/14, A01D 57/04

(54) **Automatic control system for a header of an agricultural harvesting machine and method of operation of the same**
Automatisches Kontrollsystem für einen Vorläufer einer landwirtschaftlichen Erntemaschine und Betriebsverfahren dafür
Système de commande automatique pour l'en-tête d'une moissonneuse agricole et son procédé de fonctionnement

(30) Priority: 29.10.2007 US 978280
(43) Date of publication of application: 06.05.2009
(73) Proprietor: CNH Industrial Belgium nv, 8210 Zedelgem (BE)
(72) Inventor: Bich, Gary L., New Holland, PA 17557 (US); Yde, Luc A., 9968 Bassevelde (BE)
(74) Representative: CNH Industrial IP Department

(56) References cited:
- FR-A- 2 011 687
- US-A- 4 124 970
- US-A- 4 409 778
- US-A- 4 800 711
- US-A- 4 845 931
- US-A- 5 752 372

## Description

This invention relates generally a control system for a header for an agricultural harvesting machine such as a combine, and a method of operation of the same, and, more particularly, to a control system and method providing features including an automatic reel position control operable to provide at least one selectable cutter bar and reel position combination, and which can also automatically control height and/or fore and aft positions of the reel responsive to cutter bar movements.

On a grain type header, a cutter bar typically extends across a lower front end of the header and includes a sidewardly reciprocating sickle for cutting crops. A gathering reel rotatable about a sidewardly extending axis is typically disposed above and forwardly of the cutter bar, and the type of reel of most concern here is commonly referred to as a pick up type reel will include generally radially outwardly extending tines or fingers which substantially function to rake crops rearwardly to the cutter bar, and also to convey the cut crops rearwardly over the cutter bar to a pan or cross conveyor of the header. In regard to this latter function, it is typically desired for the cut crops to flow smoothly and evenly, without collecting on the cutter bar and/or clumping, onto the pan of the header and to the cross conveyor, which can be an auger or belt, and the tines are often desirably positioned to sweep over the cutter bar without contacting it, to prevent and remove clumps.

The height of the cutter bar, and the position of the reel relative to the cutter bar, both height-wise and fore and aft, are typically variable. For example, for legumes such as soybeans, a lower cutter bar is typically desired so as to cut close to the ground, because some of the bean bearing pods are located there, and it is desirable to harvest as much of the crop as is practical. For other crops, particularly grasses such as wheat, oats, and barley, the cutter bar (and the header) is typically positioned higher, for instance, at a height typically several inches above the ground, because the grain bearing heads are at the top of the plant. And, if the straw is not to be baled, it is typically desirable to cut at an even higher height, to limit the amount of straw which is cut and inducted into the harvesting machine.

For taller stands of legumes and other crops to be cut closer to the ground, the reel will typically be positioned at a higher location relative to the cutter bar. For lower stands, and for other conditions, such as downed crops, the reel will typically be lower. Also for downed crops, the reel may desirably be positioned more forwardly, so as to increase the raking or picking up action thereof.

Observed problems that can occur include that if the tines of the reel are too close to the cutter bar, the sickle can cut the tines if of a soft material such as plastic, and can damage the knife edges of the sickle and cause slippage of the reel drive and/or the sickle drive if the tines are of a harder material such as metal. Typically, at the higher cutting heights, the cutter bar is fixed to the header so as to be unable to flex or float. Therefore, when adjusting the reel position it is only necessary to position the reel as desired, while ensuring that the tines of the reel will not be too close to the cutter bar, which is easily done particularly if the reel is to be positioned relatively high above the cutter bar and not moved. In contrast, if the reel is positioned close above the cutter bar and adjustments are to be made, and when cutting crops such as soybeans close to the ground, caution and care must be used to avoid the above problems. In the latter instance, the cutter bar is often supported in a flex or floating mode wherein it is allowed to move vertically relative to the header within a limited range of travel, and, if the tines are within the range of travel, it is possible for the cutter bar to rise up so as to engage and cut or damage the tines, or cause the other problems set forth above. This can occur unexpectedly.

Contributing to the possibility of the above problems, to increase productivity, the trend has been toward the use of wider or longer headers such that more crops are harvested during each pass of a harvesting machine over a field. With the lengthening of the headers, for instance, to lengths of 40 feet and greater, when in the float mode, the possibility of the raising all or part of the cutter bar as a result of contacting the ground is increased, due for instance, to unevenness of the ground. Also, because of the greater header width, it can be harder for a combine operator to detect field conditions that may cause the header to raise.

To help avoid or limit the above problems, it is well known for a header to include an automatic header height control system which is used when the header is lowered to a lower cutting height for beans and the like, with the cutter bar in the flex or float mode. Generally, in operation, such control will use information relating to sensed contact with the ground to determine differences in level or slope of the ground, and irregularities of the ground surface, and automatically raise and lower the header for maintaining the cutter bar in desired relation to the ground, and for maintaining a desired down pressure on the cutter bar. For this, typical systems utilize a side-by-side array of skid shoes or plates in connection with the floating cutter bar, which skid shoes extend just below the cutter bar for sensing or contacting the ground, and when one or more of the skid shoes contact the ground sufficiently to move the cutter bar upwardly, the cutter bar will at the same time provide inputs to the header height control system through a sensor, to enable the system to determine whether to raise or lower the header.

However, a problem that can occur in the operation of a header control system, is that the system may not respond to changes in ground conditions rapidly enough to avoid the cutter bar raising and causing the above problems such as contacting and damaging the reel tines. This problem can occur as a result of conditions such as slow responsiveness of the system, or settings such as a selected down pressure. For instance, this can occur as the header encounters an abrupt increase in ground height such as when emerging from a swail, ditch or depression in a field.

As another known variant that can increase the possibility of the occurrence of the above problems, some headers include cutter bars and/or reels that are movable in the fore and aft directions, in addition to upwardly and downwardly, which provides increased adjustability. For instance, it may be desirable under some conditions to adjust the position the reel more forwardly of the cutter bar, and under other conditions, to have a more rearwardly located reel. As examples, for harvesting downed crops, a more forward and lower reel location may be most advantageous, and for taller crop stands, a higher and more rearward location may be preferred. And, in the former instance, it may be desirable adjust the fore and aft position of the cutter bar and/or the reel during operation, as well as the vertical position of the reel, to optimize crop pick up, such that there can be a danger of the tines accidentally entering the sickle, and/or the cutter bar raising up sufficiently to contact the tines, if a wrong or inadvertent movement is made.

Thus, a need has been identified for a capability for closely controlling the relative positions of the reel and the cutter bar, particularly relatively complex two dimensional movements, so as to avoid the above occurrences. Further, a combine may be used for harvesting several varieties of crops, or a field to be harvested may contain both standing and downed crops, and, as a result, it would be desirable to have the capability to provide different preset reel and/or cutter bar positions for the various crop types and/or regions, and to be able to select them quickly and easily.

Numerous control devices are known which attempt to meet partially the above need, by providing an automatic capability for controlling reel height relative to a movable or floating cutter bar, having utility both in cooperation with a header height control system and in the absence of one. In this regard reference is made to US4124970 which uses spring operated switches for operating a fluid control system for raising and lowering the reel responsive to cutter bar movements; and US4204383 which uses a mechanical follower mechanism for tracking cutter bar movements. However, neither of these controls disclose a capability for controlling fore and aft movements also, or integration with apparatus for doing so, nor do they provide easy and convenient variability for adapting to different or changing conditions and crop types.

Reference is also made to US5752372, which discloses the preamble of claim 1 and US4800711, which provide apparatus enabling the reel to follow fore and aft movements of the cutter bar, the former of which utilizes a cam mechanism, and the latter of which an interlock mechanism, but neither provide a capability for easy adjustability, or disclose use in cooperation with, or the ability to readily integrate with a vertical following capability, such as those disclosed in US4124970 and US4204383.

Accordingly an object of the invention is to provide a reel position control that provides one or more of the capabilities and overcomes one or more of the problems, set forth above.

According to a first aspect of the invention there is provided a control system for a combination of a header and an agricultural harvesting machine comprising:
a feeder lift cylinder connected to the front end of the harvesting machine and a feeder supporting the header and controllably operable for moving the feeder and the header generally upwardly and downwardly in relation to the harvesting machine;
a reel lift actuator and a reel fore and aft position actuator connected to a reel of the header and controllably operable for moving the reel relative to the header
a cutter bar fore and aft position actuator connected to a cutter bar of the header and controllably operable for moving the cutter bar generally forwardly and rearwardly in relation to the header;
a cutter bar fore and aft position sensor operable for outputting information representative of the fore and aft position of the cutter bar;
at least one cutter bar height sensor configured for sensing the height of a cutter bar of the header above a ground surface and outputting signals representative thereof; and
at least one controller connected to the feeder lift cylinder, the reel lift actuator, the reel fore and aft position actuator, the cutter bar fore and aft position actuator for outputting commands thereto and to the cutter bar fore and aft position sensor for receiving signals therefrom;
the at least one controller being programmed so as to:
   - automatically output commands to the reel fore and aft position actuator so as to follow movements of the cutter bar in the fore and aft direction in response to signals received from the cutter bar fore and aft position sensor; and
   - automatically output commands to the reel lift actuator for moving the reel so as to follow movements of the cutter bar,
characterised in that:
   the at least one controller further is connected to the feeder lift cylinder for outputting commands thereto and to the at least one cutter bar height sensor for receiving signals therefrom; and
   the at least one controller is programmed so as to:
      - automatically output commands to the feeder lift cylinder for moving the header upwardly or downwardly, respectively, when the signals outputted by the at least one cutter bar height sensor represent a movement of the cutter bar upwardly or downwardly, respectively, beyond a predetermined range; and
      - automatically output commands to the reel lift actuator for moving the reel so as to follow movements of the cutter bar when the signals outputted by the at least one cutter bar height sensor represent a movement of the cutter bar within said predetermined range.

As an advantage of the invention, for smaller up and down movements of the cutter bar, for instance, resulting from the cutter bar floating over normal irregularities of the ground, the control system can output reel position commands to move the reel, to maintain the desired relation to the cutter bar. Then, when the cutter bar movements are greater, such as can be expected for abrupt changes in ground contour, e.g., swails and the like the system will raise the header, such that the cutter bar will effectively be lowered relative to the reel, to thereby maintain the desired cutter bar/reel relationship.

As another advantage of the invention, because the control system is capable of monitoring cutter movements and responsively moving the reel or header to maintain the desired cutter bar/reel relationship, necessity for complex linkages and/or interlock mechanisms connecting the cutter bar and reel, is eliminated, as is any manual adjustment of such apparatus for changing the cutter bar/real relationship.

According to an embodiment of the invention the control system further comprises at least one input device, connectable to the at least one controller, operable for outputting operator input commands to the at least one controller.

According to a further embodiment of the invention the at least one input device comprises an input device for inputting cutter bar fore and aft position commands.

According to an embodiment of the invention the at least one cutter bar height sensor comprises an element configured and positioned for contacting the ground surface, such as for example a skid shoe.

According to a preferred embodiment of the invention the cutter bar is renderable in a flex mode wherein the cutter bar is movable upwardly and downwardly in relation to the header.

According to a further embodiment of the invention the at least one controller further is programmed to output commands to automatically position the cutter bar in at least one predetermined fore and aft position and to automatically position the reel in at least one predetermined position in relation to the cutter bar in response to the at least one predetermined input command.

According to a further preferred embodiment of the invention the at least one controller is programmed to automatically position the cutter bar and the reel in a first predetermined position in response to a first predetermined input, in this first predetermined position the cutter bar is positioned adjacent to a forward end of a fore and aft range of movement of the cutter bar and the reel is positioned adjacent to an upper end of a vertical range of movement of the reel; and to automatically position the cutter bar and the reel in a second predetermined position in response to a second predetermined input, in this second predetermined position the cutter bar is positioned in a position rearwardly of the first predetermined position of the cutter bar and the reel is positioned in a lowered position relative to the first predetermined position of the reel As an example, one selectable cutter bar and reel position combination can position the cutter bar forwardly within a fore and aft range of movement thereof, and position the reel at a relatively high location in relation to the cutter bar, for instance, so as to have good utility for harvesting taller stands of crops, and another position combination can position the cutter bar more rearwardly and the reel lower, so as to have good utility for harvesting shorter stands of crops or crops down on the ground. And, in both instances, the controller can be programmed such that if the cutter bar is moved, either as a result of an inputted command, or as a function of a float capability, the controller will automatically control the reel to follow the movement, whether a forward or rearward movement, an up or down movement, or a combination of both. As a result, optimized reel operation can be maintained, and possible damage to the tines of the reel and/or sickle of the cutter bar, and other problems, such as, but not limited to, slippage of the reel and/or sickle drive, can be limited or avoided.

According to a second aspect of the invention there is provided a method for controlling positional movements of a reel of a header of an agricultural harvesting machine that comprises the steps of:
providing a control system according to the first aspect of the invention;
positioning the reel in a selected upward and downward position and a selected fore and aft position, respectively, relative to the header so as to establish a positional relationship between the reel and a cutter bar of the header;
monitoring movements of the cutter bar and determining if the movements exceed at least one predetermined value required for maintaining the established positional relationship; and
if yes, then determining a corrective movement of the reel for reestablishing the relationship, and controlling the reel fore and aft position actuator and the reel lift actuator to execute the corrective movement.

Several embodiments of the present invention will now be described in further detail, by way of example only, with reference to the accompanying drawings, in which:
Fig. 1 is a side view of an agricultural combine having a header in a raised position above the ground, showing a cutter bar of the header depending therefrom, and a reel of the header supported in a suitable position above the cutter bar;
Fig. 1A is a side view of the front of the combine of Fig. 1, showing the header in a lowered position, with the cutter bar resting on the ground surface;
Fig. 2 is a front view of the combine of Figs. 1 and 1A, showing the header in the lowered position and illustrating flexure of the cutter bar for conforming to contours of the ground surface, and showing the reel in dotted lines above the cutter bar;
Fig. 3 is an enlarged, simplified schematic side view of the combine header, illustrating representative positioning and relationships of tines of the reel of the header to the cutter bar;
Fig. 4 is another enlarged, simplified schematic side view of the header, illustrating representative interference between tines of the reel and the cutter bar;
Fig. 5 is a simplified fragmentary perspective view of the cutter bar of FIG. 4, illustrating a tine of the reel inserted between the edge of a sickle knife and a guard of the cutter bar;
Fig. 6 is a simplified diagrammatic representation of one embodiment of an automatic control system of the invention associated with elements of the combine and header of Fig. 1;
Fig. 7 is a simplified schematic side view of the header, illustrating the cutter bar and reel in a selectable predetermined relationship typical of those used for harvesting shorter stands of crops;
Fig. 8 is another simplified schematic side view of the header, illustrating the cutter bar and reel in a second selectable predetermined relationship typical of those used for harvesting taller stands of crops; and
Fig. 9 is a simplified diagrammatic representation of another embodiment of an automatic control system of the invention associated with elements of the combine and header of Fig. 1.

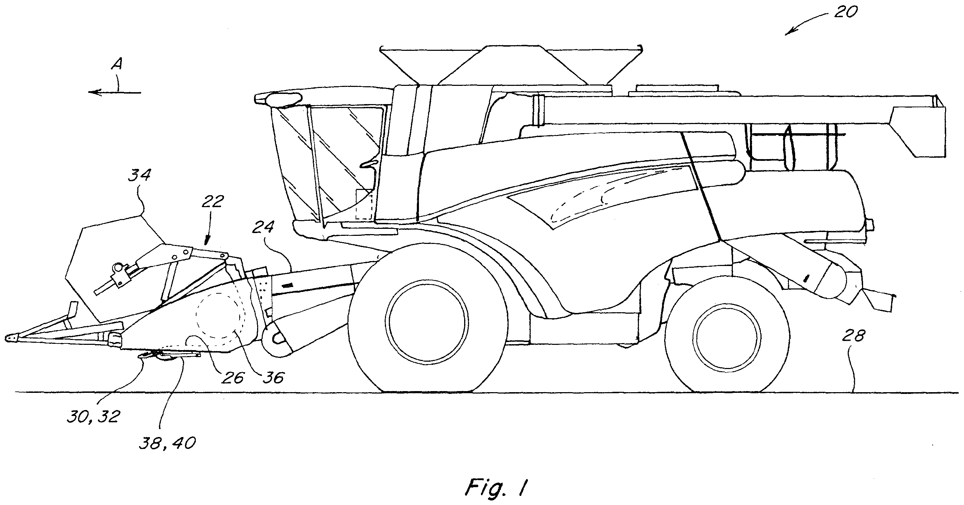

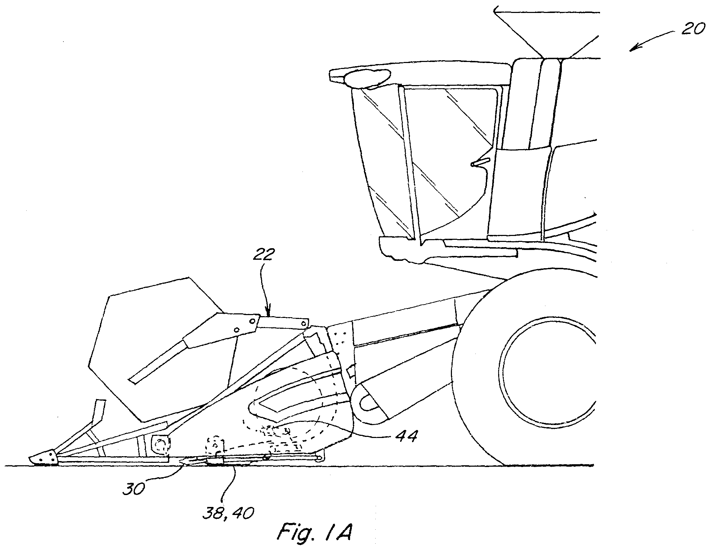

Turning now to the drawings wherein a preferred embodiment of the invention is shown, in Figure 1, a conventional, well known agricultural combine 20 is shown including a conventional header 22 supported on a feeder 24, for cutting or severing crops such as, but not limited to, legumes such as soybeans and small grains such as wheat, and inducting the severed crops into feeder 24 for conveyance into combine 20 for threshing and cleaning, in the well known manner as combine 20 moves forwardly over a field, as denoted by arrow A. Header 22 includes a bottom or pan 26 which is supported in desired proximity to a ground surface 28 of a field during the harvesting operation, and an elongate, sidewardly extending cutter bar 30 supporting elongate, reciprocally movable sickle knives 32 disposed along a forward edge of pan 26 which sever the crop for induction into header 22. Header 22 includes an elongate, sidewardly extending reel 34 disposed above pan 26 and rotatable in a direction for gathering the crops to be cut toward cutter bar 30, and then for facilitating induction of the severed crops into header 22. An elongate, rotatable auger 36 extends in close proximity to a top surface of pan 26 and has spiral flights therearound (not shown) which convey the severed crops to feeder 24 for induction into combine 20. In Figure 1, header 22 is shown at an elevated position above ground surface 28, which is representative of a typical height for transport over roads, and also for severing crops at a desired height above ground surface 28, the height shown being intended to be representative of those typically used for harvesting grasses such as wheat, oats and barley, with minimal straw generation. Such heights as illustrated in Figure 1 will typically be 12.7 centimetres (5 inches) or more above ground surface 28. In this configuration, cutter bar 30 will typically be supported at a fixed height in relation to header 22, but may optionally be movable forwardly and rearwardly within a predetermined range of movement relative thereto. Reel 34 will be movable upwardly, downwardly, and optionally forwardly and rearwardly, in relation to header 22 and cutter bar 30, for achieving desired crop cutting and induction characteristics.

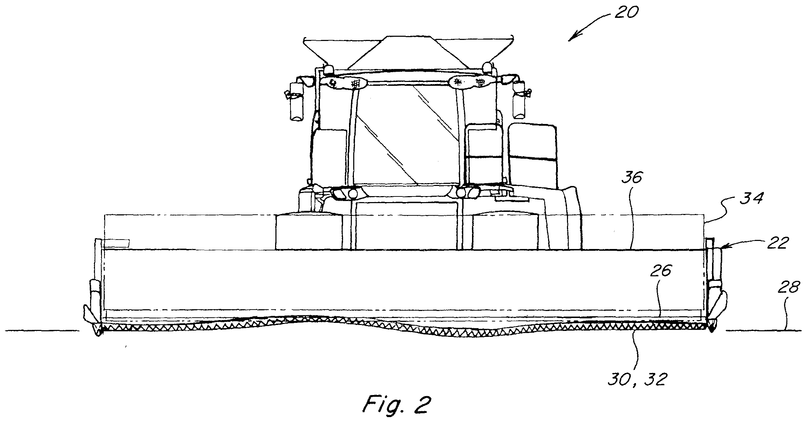

Referring also to Figures 1A and 2, header 22 is shown in another position, lowered to ground surface 28, for positioning cutter bar 30 just above ground level, which is a height typically utilized for cutting crops, such as soybeans and the like. Here, it should be noted that typically, when a header, such as header 22, is operated at a height such as shown in Figures 1A and 2, cutter bar 30 is typically operated or supported in a floating mode, wherein it is allowed to move vertically upwardly and downwardly relative to header 22 and pan 26 in response to contact with irregularities on or of ground surface 28, for purposes including to avoid cutter bar 30 and/or sickle knives 32 contacting or being driven into ground surface 28 and possibly being damaged thereby. Typically also, this upward movement is sensed to provide information to one or more systems of the combine, such as an automatic header height control, a feeder height and/or angle control, a header tilt control, and/or other control, which may result in some action by the control or controls, which in the instance of a header height control, can include automatically raising the header, as is well-known. Apparatus for sensing upward movements of a cutter bar are well-known in the art, for instance, as illustrated in US4124970.

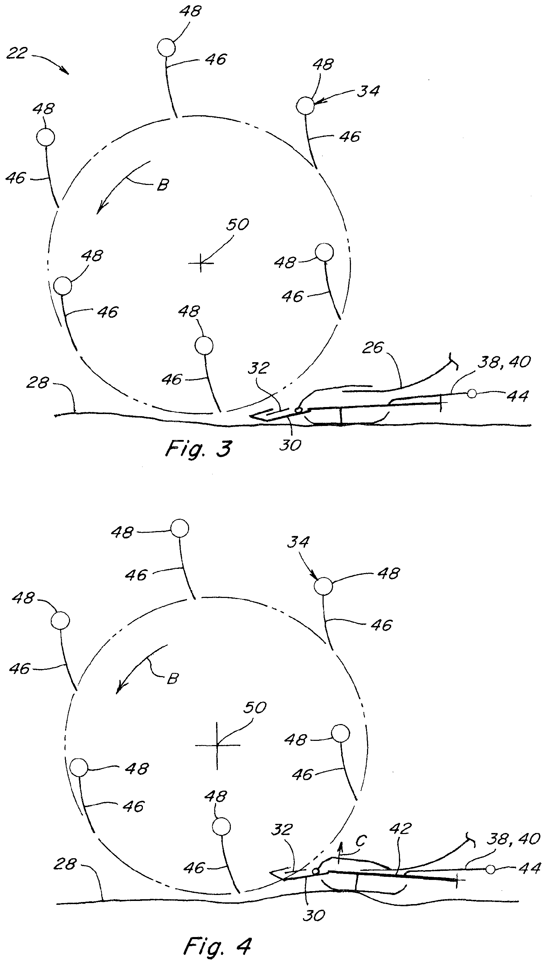

Referring also to Figures 3 and 4, a typical cutter bar height sensor apparatus 38 is illustrated in association with cutter bar 30, and generally includes a linkage or sensor arm 40 which is contacted by support structure 42 of cutter bar 30 when moved upwardly and downwardly, for translating the movements to a suitable sensor 44, which can be, for instance, a conventional potentiometer, or the like, as is well-known in the art. The cutter bar height sensor (38) preferably comprises an element configured and positioned for contacting the ground surface (28), such as for example a skid shoe

Reel 34 shown is conventionally constructed and operable, and includes a plurality of elongate tines 46 supported at spaced locations on bars 48 extending across the width of header 22, so as to move in a raking action toward header 22, and particularly in the bottom region, toward cutter bar 30, as the reel 34 is rotated in a counterclockwise direction, as denoted by arrow B, around a central axis 50 thereof. As illustrated in Figure 3, reel 34 can be positioned close to cutter bar 30, such that at their lower extend of travel around axis 50, tines 46 will pass close to and even just over the cutter bar, which is advantageous as it gathers crops toward cutter bar 30 for cutting, and also so as to rake the cut crops over and rearwardly past the cutter bar, so as not to collect thereon and possibly interfere with the cutting action. A lowered position such as this, with the reel positioned even more forwardly, is useful in a role to pick up the crops, which can be advantageous when the crops are downed, that is, where the crops, or some of them, are lying on or close to ground surface 28.

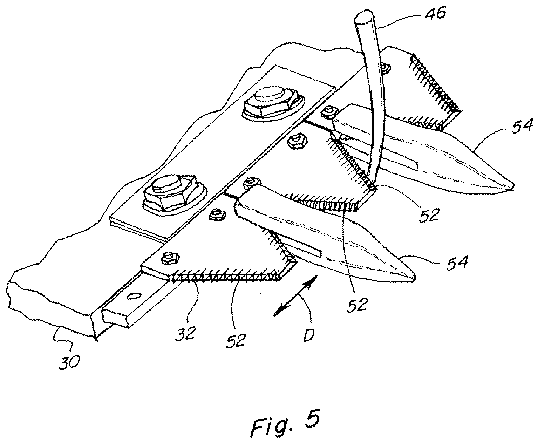

However, a problem that can occur, as noted under the Background Art heading above and as illustrated in Figure 4, and also in Figure 5, is that if reel 34 is lowered too far and/or if cutter bar 30 in the floating mode moves upwardly too far, such as could occur if brought into contact with a raised irregularity on ground surface 28 or when emerging from a swail or ditch (see arrow C in Figure 4), tines 46 can be brought into contact with sharp sickle knife edges 52 of cutter bar 30. This can occur along the entire width of the header, or at one or more locations therealong, as illustrated in Figure 2. If this occurs, one or more of the tines may enter a space or spaces between the sharp knife edges 52 of sickle knife 32 and knife guards 54, and be cut by the reciprocating action of sickle knife 32 (arrow D). Obviously, if this were to occur, the tine could be cut or broken, and/or the sharp edge of the sickle knife dulled, to thereby decrease the cutting effectiveness of the header. The sickle drive can also be affected. This may occur, even if a header height control system is operating, for instance, if the header down pressure setting is high, or the upward movement of the cutter bar is abrupt or rapid. It can also be observed that if the reel is moved farther in the rearward direction and/or is lowered, or cutter bar 30 is moved forwardly, the risk of contact between the sickle knife and tines is increased.

The known hardware devices referenced and discussed above under the Background Art heading, attempt to address the problem of contact between a cutter bar and reel, but only in relation to certain relative movements thereof, generally, in either the vertical direction, or the horizontal direction. None of the referenced devices are configured for preventing such contact when movement in more than one direction is involved. This is a disadvantage for the discussed reasons. As apparent from this disadvantage, it would be desirable to have a capability for quickly and easily positioning the reel in close proximity with the cutter bar, without incurring risk of contact, both as the reel is initially positioned, and as it is subsequently moved or adjusted, and as the cutter bar is initially positioned, subsequently repositioned or adjusted, and further as it moves upwardly and downwardly in the floating mode. Additionally, it would be desirable to have at least one preset or predetermined reel position, and to integrate operation of a reel position control and a header height control, such that when the cutter bar is raised in the floating mode, the header is not always raised. These advantages are achieved by the automatic header control system of the invention discussed hereinbelow.

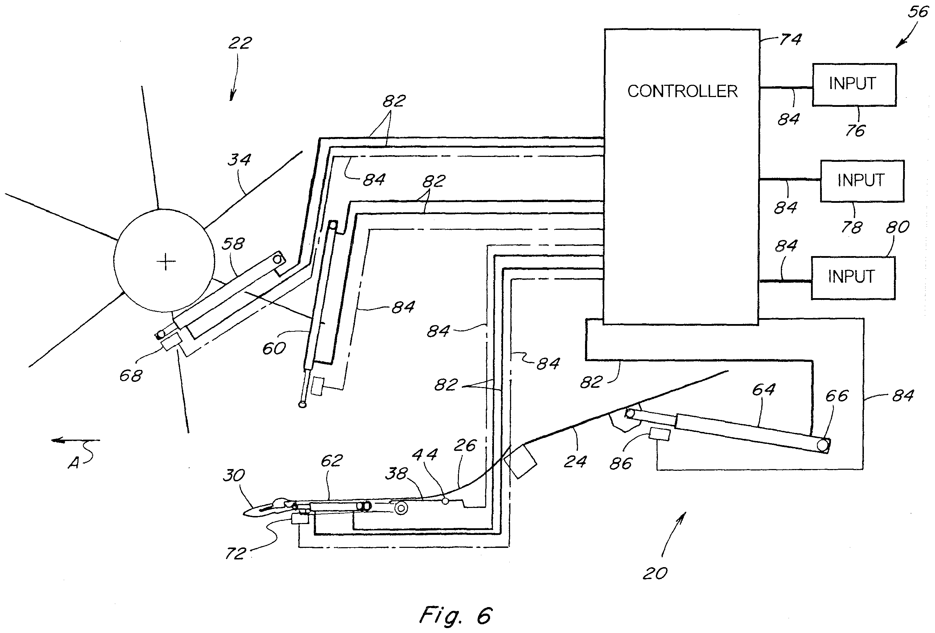

Referring also to Figure 6, one embodiment of an automatic header control system 56 constructed and operable according to the present invention is shown. Control system 56 includes at least one reel fore and aft position actuator 58 controllably operable for moving reel 34 generally forwardly and rearwardly in relation to header 22, at least one reel lift actuator 60 controllably operable for moving reel 34 generally upwardly and downwardly in relation to header 22, and at least one cutter bar fore and aft position actuator 62 controllably operable for moving cutter bar 30 generally forwardly and rearwardly in relation to header 22. Combine 20 includes at least one feeder lift cylinder 64, connected to the front end of combine 20 and feeder 24, by pinned connections 66, and controllably operable for moving feeder 24 and header 22 generally upwardly and downwardly in relation to the combine. Each of actuators 58, 60 and 62, and cylinder or cylinders 64, is preferably conventionally constructed and operable.

Control system 56 includes a reel fore and aft position sensor 68 operable for outputting information representative of a fore and aft position of reel 34, a reel lift position sensor 70 operable for outputting information representative of a vertical position of the reel, and a cutter bar fore and aft position sensor 72 operable for outputting information representative of the fore and aft position of cutter bar 30. System 56 includes a processor based programmable controller 74, and a plurality of operator inputs 76, 78 and 80, preferably comprising momentary contact switches on a control handle in an operator cab of combine 20. Controller 74 is connected in operative control of actuators 58, 60 and 62, respectively, via fluid lines 82, and is connected to sensors 68, 70 and 72, and inputs 76, 78 and 80 via conductive paths 84, which can comprise, for instance, wires of a wiring harness, or a wireless interface. Here, system 56 is configured as a single controller system, and thus controller 74 is also optionally connected in operative control of feeder lift cylinder 64, via a fluid line 82, and to a feeder lift position sensor 86 operable for outputting information representative of feeder position, and to position sensor 44 operable for outputting cutter bar height information, via additional conductive paths 84. Controller 74 will also include a suitable memory.

As an example in regard to the control of actuators 58, 60 and 62, and lift cylinder 64, controller 74 can control operation thereof in any suitable manner, for instance, via a system of solenoid valves controllable using variable electrical signals such as variable electrical currents, in the well known manner, for controlling pressurized fluid flow to and from the respective actuator or cylinder.

Controller 74 is configured and programmed to allow an operator to position cutter bar 30 through a range of fore and aft positions, using a designated one of inputs 76, 78 or 80. The operator can position reel 34 through both a range of fore and aft and vertical positions, as desired or pre programmed, using the others of the inputs. As a result, an operator can achieve a desired reel to cutter bar relationship, for the harvesting characteristics sought, for instance, a desired crop flow into the header. And, as cutter bar 30 and reel 34 are being positioned, controller 74 will monitor the positions of both, and is operable automatically, or optionally responsive to an input command, to store values representative of the cutter bar position and the reel position. From this positional data, controller 74 is operable for determining the positional relationship of the reel to the cutter bar, in two dimensions, vertical and horizontal, as a function of the known physical parameters. Subsequently, in one automatic cutter bar following mode of operation, controller 74 is automatically operable for controlling either or both reel actuators 58 and 60 for moving the reel responsive to movements of cutter bar 30, for maintaining the positional relationship of the reel to the cutter bar. This is in response to both any additional fore and aft movements of the cutter bar made by the operator, and also automatic vertical movements thereof, resulting from contact between the cutter bar and the ground, such as illustrated by the upward movement denoted by arrow C in Figure 4. As a result, problems such as interference between the reel and cutter bar, as illustrated in Figures 4 and 5, can be avoided.

Further, controller 74 is operable to control the reel actuators to follow compound vertical and horizontal movements of the cutter bar, for maintaining the last set or predetermined reel/cutter bar relationship, or to follow at least such portions of those cutter bar movements as required to prevent interference of the reel with the cutter bar that can possibly cause damage, such as to the reel tines.

Thus, in one automatic reel following mode, as an operator uses the control handle input to move the cutter bar fore and/or aft to a desired position, controller 74 can automatically control the reel to follow the movement, without action by the operator. This following movement can be a function of a predetermined reel cutter bar relationship, or a function of a last operator inputted relationship.

Generally, in a header height control mode, feeder lift cylinder 64 will be operated to raise header 22 responsive to upward movements of the cutter bar resulting from ground contact, as sensed by position sensor 44, to limit digging and prevent damage to the sickle and related components. The header will then be lowered, responsive to sensed downward movements of the cutter bar. A benefit of this is that, as a result of the header being raised, the force from the ground contact acting to urge the cutter bar upwardly is reduced or limited, and thus the upward cutter bar movement toward the reel is stopped or slowed, interference between the reel and the cutter bar can be avoided.

As noted above, controller 74 can be configured for controlling the automatic header height function. Additionally, as an advantage of the invention, this function can be integrated with the reel following function. As a preferred example, the present system can provide an alternative header height control routine, wherein controller 74 will automatically control the reel actuator or actuators in a reel follower mode to raise the reel responsive to the upward cutter bar movements of a lesser magnitude, and then to control the header height via the feeder lift cylinders to raise the header in the header height control mode, only responsive to cutter bar movements of greater magnitude. As a result, smaller upward movements of the cutter bar resulting from ground contact are responded to only by reel movements following the cutter bar movements, whereas greater upward cutter bar movements are responded to by header movements. As an advantage of control in this manner, the reel can be positioned closer to the cutter bar, with less risk of reel/cutter bar interference. As another advantage, a higher down force can be maintained on the cutter bar, as there is less risk of interference between the reel tines and the cutter bar, particularly with regard to rapid upward movements of the cutter bar.

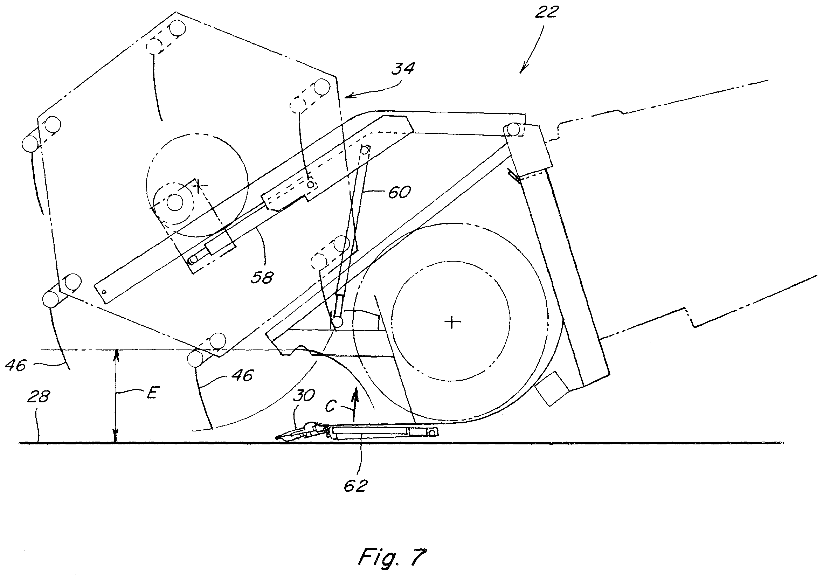

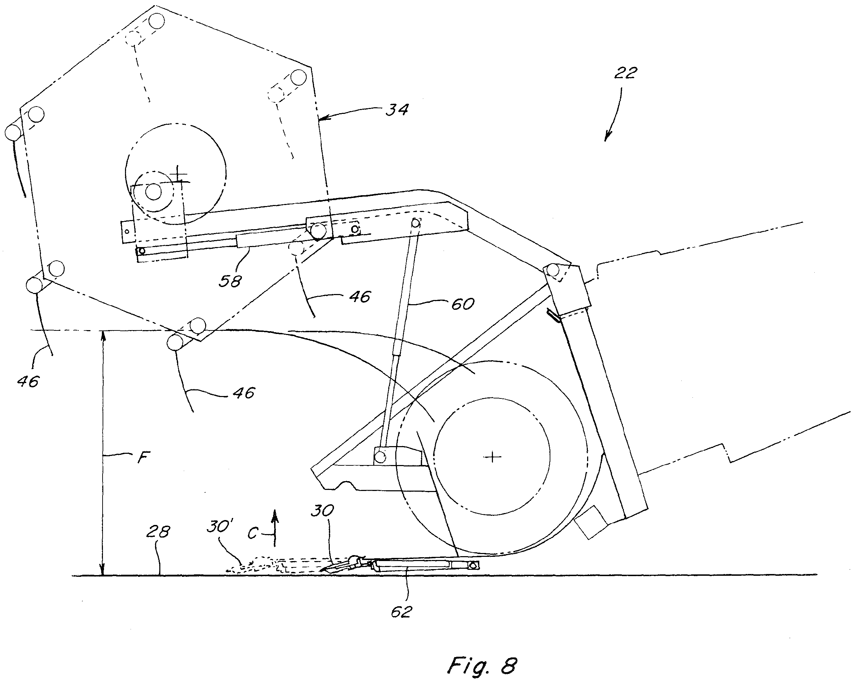

Referring also to Figures 7 and 8, as still another feature of the invention, controller 74 can be programmed to store one or more predetermined positions of header 22, cutter bar 30, and/or reel 34, and automatically move them to the predetermined position or positions, responsive to a designated operator input command or commands. In Figure 7, for instance, cutter bar 30 is illustrated in a rearward position within its fore and aft range of movement. Cutter bar 30 can be either fixed, or in a floating or flex mode. Reel 34 is positioned at a rearward and low position within its fore and aft, and height ranges of movement, respectively. This relationship would be representative of those typically used for harvesting a lower stand of, for instance, crops such as soybeans, having a relatively short height E. To achieve this positioning, the stored settings for the positions of actuators 58 and 60 can be recalled for positioning reel 34, and a stored setting for actuator 62 can be used for positioning cutter bar 30. Subsequently, if cutter bar 30 is in the floating mode, and rises, as denoted by arrow C, for instance, as a result of ground contact, controller 74 (Figure 6) will automatically control actuator 60 to raise reel 34 accordingly in a following movement. Additionally, if the operator inputs a command for fore and/or aft movement of cutter bar 30, the controller, if in the reel following mode, will automatically control actuator 58 and/or actuator 60 to make a following movement for maintaining the reel/cutter bar relationship. And, if the controller is not in the reel following mode, which can be exited by inputting a predetermined command, cutter bar adjustments can be made as desired, with no corresponding automatic reel following action. Optionally, this new set of positions can be stored, such that subsequently, upon inputting of a predetermined input command, the controller will move the cutter bar and reel to these positions. This feature is advantageous particularly when varying height and other crop stand conditions are encountered, and it is desired to have a capability to rapidly and accurately position both the cutter bar and the reel for specific conditions.

In Figure 8, cutter bar 30 is denoted 30' illustrated in dotted lines in a forward position within its fore and aft range of movement. Cutter bar 30 can again be either fixed, or in a floating or flex mode. Here, reel 34 is positioned at a forward and high position within its fore and aft, and height ranges of movement, respectively. This relationship would be representative of those typically used for harvesting taller stands of crops such as soybeans. With header 22 raised, this configuration would also be typical of a relationship for harvesting a grain such as wheat having a relatively taller height F, compared to height E. To achieve this positioning, additional stored settings for the positions of actuators 58 and 60 can be recalled for positioning reel 34, and a stored setting for actuator 62 can be used for positioning cutter bar 30. Then, when harvesting, if cutter bar 30 is in the floating mode, and rises, as denoted by arrow C, for instance, as a result of ground contact when cutting crops, controller 74 (Figure 6), when in the reel following mode, can automatically control actuator 60 to raise reel 34 accordingly in a following movement. Again, while in the reel following mode, if the operator inputs a command for fore and/or aft movement of cutter bar 30, controller 74 will automatically control actuator 58 and/or actuator 60 to make a corresponding following movement, for maintaining the reel/cutter bar relationship. And, if the controller is not in the reel following mode, cutter bar adjustments can be made as desired, with no corresponding automatic reel following action. However, in this mode, the controller can be programmed to optionally operate in a background mode to prevent execution of operator inputted commands that would result in reel/cutter bar interference, or which would place the reel and cutter bar in proximity deemed to be a danger of interference, for instance, if the cutter bar were to rise while in the floating mode.

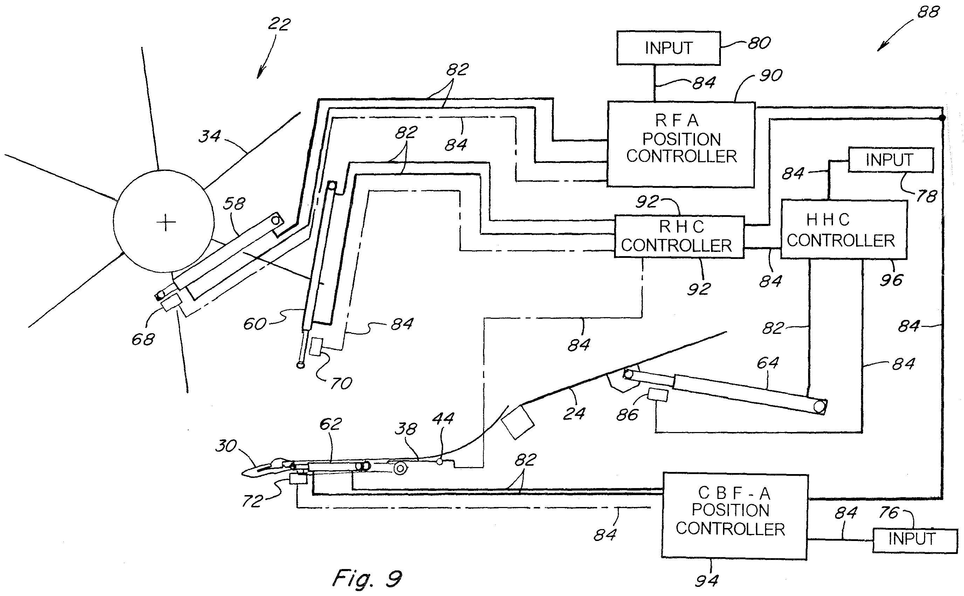

Referring also to Figure 9, an alternative embodiment of an automatic control system 88, constructed and operable according to the present invention is shown. System 88 is automatically operable to perform all of the reel following routines discussed above in regard to system 56 for controlling the positions of cutter bar 30 and reel 34 of header 22. System 88 differs from system 56, in that a network of separate controllers are used for controlling the respective actuators 58, 60 and 62, and lift cylinder 64. More particularly, a reel fore and aft (R F A) position controller 90 is connected in operative control of reel fore and aft position actuator 58 via fluid lines 82 and to reel for and aft position sensor 68 and input 80 via conductive paths 84; a reel height control (R H C) controller 92 is connected in operative control of reel lift actuator 60 via fluid lines 82 and to sensor 44 and reel lift position sensor 70 via conductive paths 84; a cutter bar fore and aft (C B F-A) position controller 94 is connected in operative control of cutter bar fore and aft position actuator 62 via fluid lines 82 and to cutter bar fore and aft position sensor 72 and input 76 via conductive paths 84; and a header height control (H H C) controller 96 is connected in operative control of feeder lift cylinder 64 via a fluid line 82, and to feeder height sensor 86 and input 78 via conductive paths 94. Controllers 90, 92, 94 and 96 are connected together via conductive paths 84, which can comprise a data bus or the like, and suitable interfaces, for sharing positional data of the actuators controlled thereby. Thus, as an example, in the reel following mode controllers 90 and 92 will be programmed to monitor positional data outputted by sensors 44 and/or 72 regarding either or both the fore and aft and vertical position of cutter bar 30, for changes to which the respective controller will be programmed to respond with a corresponding reel position command. Header height control controller 96 can also be programmed to monitor vertical cutter bar position data, and responsively operate feeder lift cylinder to raise or lower header 22 and feeder 24 in a header height control movement. This illustrates the flexibility of the present systems for incorporation into a variety of controller architectures, including one or more controllers for controlling the various movements involved.

Thus from a review of the above disclosure, it should be apparent that a control system of the invention, such as either system 56 or system 88 discussed herein, is capable of monitoring cutter movements and responsively moving the reel or header to maintain a desired cutter bar/reel relationship, thus eliminating necessity for complex linkages and/or interlock mechanisms connecting the cutter bar and reel, and any manual adjustment of such apparatus for changing the cutter bar/real relationship. The systems of the invention also have utility for providing preset or stored commands for moving the cutter bar and or reel of a header to any of one or more predetermined positions, both in the fore and aft and vertical directions. Still further, improved operability of a header height control system can be achieved by integration of reel following and header height control functions, wherein for at least some cutter bar movements, responsive reel movements are made in lieu of feeder and header movements.

It will be understood that changes in the details, materials, steps, and arrangements of parts which have been described and illustrated to explain the nature of the invention will occur to and may be made by those skilled in the art upon a reading of this disclosure within the principles and scope of the invention as defined by the claims. The foregoing description illustrates the preferred embodiments of the invention; however, concepts, as based upon the description, may be employed in other embodiments without departing from this scope of the invention.

## Claims

1. A control system (56, 88) for a combination of a header (22) and an agricultural harvesting machine (20), comprising:
a feeder lift cylinder (64) connected to the front end of the harvesting machine (20) and a feeder (24) supporting the header (22) and controllably operable for moving the feeder (24) and the header (22) generally upwardly and downwardly in relation to the harvesting machine (20);
a reel lift actuator (60) and a reel fore and aft position actuator (58) connected to a reel (34) of the header (22) and controllably operable for moving the reel (34) relative to the header (22);
a cutter bar fore and aft position actuator (62) connected to a cutter bar (30) of the header (22) and controllably operable for moving the cutter bar (30) generally forwardly and rearwardly in relation to the header (22);
a cutter bar fore and aft position sensor (72) operable for outputting information representative of the fore and aft position of the cutter bar (30);
at least one cutter bar height sensor (38) configured for sensing the height of a cutter bar (30) of the header (22) above a ground surface (28) and outputting signals representative thereof; and
at least one controller (74, 90, 92, 94, 96) connected to the reel lift actuator (60), the reel fore and aft position actuator (58), the cutter bar fore and aft position actuator (62) for outputting commands thereto and to the cutter bar fore and aft position sensor (72) for receiving signals therefrom;
the at least one controller (74, 90, 92, 94, 96) being programmed so as to:
- automatically output commands to the reel fore and aft position actuator (58) so as to follow movements of the cutter bar (30) in the fore and aft direction in response to signals received from the cutter bar fore and aft position sensor (72); and
- automatically output commands to the reel lift actuator (60) for moving the reel (34) so as to follow movements of the cutter bar (30),
**characterised in that**:
the at least one controller (74, 90, 92, 94, 96) further is connected to the feeder lift cylinder (64) for outputting commands thereto and to the at least one cutter bar height sensor (38) for receiving signals therefrom; and
the at least one controller (74, 90, 92, 94, 96) is programmed so as to:
- automatically output commands to the feeder lift cylinder (64) for moving the header (22) upwardly or downwardly, respectively, when the signals outputted by the at least one cutter bar height sensor (38) represent a movement of the cutter bar (30) upwardly or downwardly, respectively, beyond a predetermined range, and
- automatically output commands to the reel lift actuator (60) for moving the reel (34) so as to follow movements of the cutter bar (30) when the signals outputted by the at least one cutter bar height sensor (38) represent a movement of the cutter bar (30) within said predetermined range.

2. A control system according to claim 1, **characterised in that** it further comprises at least one input device (76, 78, 80), connectable to the at least one controller (74, 90, 92, 94, 96), operable for outputting operator input commands to the at least one controller (74, 90, 92, 94, 96).

3. A control system according to claim 2, **characterised in that** the at least one input device (76, 78, 80) comprises an input device (76) for inputting cutter bar (30) fore and aft position commands.

4. A control system according to any of the preceding claims, **characterised in that** the at least one cutter bar height sensor (38) comprises an element configured and positioned for contacting the ground surface (28).

5. A control system according to claim 4, **characterised in that** the element configured for contacting the ground surface (28) comprises a skid shoe.

6. A control system according to any of the preceding claims, **characterised in that** the cutter bar is renderable in a flex mode wherein the cutter bar (30) is movable upwardly and downwardly in relation to the header (22).

7. A control system according to claim 2 alone or in combination with any of the claims 3 to **characterised in that** the at least one controller (74, 90, 92, 94, 96) further is programmed to output commands to automatically position the cutter bar (30) in at least one predetermined fore and aft position and to automatically position the reel (34) in at least one predetermined position in relation to the cutter bar (30) in response to the at least one predetermined input command.

8. A control system according to claim 7, **characterised in that** the at least one controller (74, 90, 92, 94, 96) is programmed:
to automatically position the cutter bar (30) and the reel (34) in a first predetermined position in response to a first predetermined input, in this first predetermined position the cutter bar (30) being positioned adjacent to a forward end of a fore and aft range of movement of the cutter bar (30) and the reel (34) being positioned adjacent to an upper end of a vertical range of movement of the reel; and
to automatically position the cutter bar (30) and the reel (34) in a second predetermined position in response to a second predetermined input, in this second predetermined position the cutter bar (30) being positioned in a position rearwardly of the first predetermined position of the cutter bar (30) and the reel (34) being positioned in a lowered position relative to the first predetermined position of the reel (34).

9. A control system according to any of the preceding claims, **characterised in that** it further comprises at least one of the following sensors (86, 70, 68) being connectable to the at least one controller (74, 90, 92, 94, 96) for receiving signals therefrom:
a feeder lift position sensor (86) operable for outputting information representative of feeder position
a reel lift position sensor (70) operable for outputting information representative of a vertical position of the reel (34);
a reel fore and aft position sensor (68) operable for outputting information representative of a fore and aft position of the reel (34).

10. A method for controlling positional movements of a reel (34) of a header (22) of an agricultural harvesting machine (20), **characterised in that** it comprises the steps of:
providing a control system (56, 88) according to any of the preceding claims;
positioning the reel (34) in a selected upward and downward position and a selected fore and aft position, respectively, relative to the header (22) so as to establish a positional relationship between the reel (34) and a cutter bar (30) of the header (22);
monitoring movements of the cutter bar (30) and determining if the movements exceed at least one predetermined value required for maintaining the established positional relationship; and
if yes, then determining a corrective movement of the reel (34) for reestablishing the relationship, and controlling the reel fore and aft position actuator (58) and the reel lift actuator (60) to execute the corrective movement.

11. A method according to claim 10, **characterised in that** the step of monitoring movements of the cutter bar (30) and determining if the movements exceed at least one predetermined value required for maintaining the established positional relationship, further comprises determining if vertical movements of the cutter bar (30) exceed a second predetermined value, and if yes, then holding the position of the reel (34) and determining a corrective movement of the header (22) for returning the cutter bar (30) to a position within the second predetermined range.

12. A method according to claim 10 or 11 when referring to claim 2, **characterised in that** it comprises additional steps of:
if an input command to move the cutter bar (30) is received, then determine if the commanded fore and aft movement of the cutter bar (30) will move the cutter bar (30) beyond the established positional relationship with the reel (34), and
if yes, then control the cutter bar fore and aft position actuator (62) so as to only move the cutter bar (30) by an amount which maintains the established positional relationship.

13. A method according to claim 10 or 11 when referring to claim 2, **characterised in that** it comprises additional steps of:
if an input command to move the cutter bar (30) is received, then determine if the commanded fore and aft movement of the cutter bar (30) will move the cutter bar (30) beyond the established positional relationship with the reel (34), and
if yes, then determine a movement of the reel (34) for maintaining the established positional relationship, and
control the cutter bar (30) position actuator so as to move the cutter bar (30) responsive to the input command, and
control the reel position actuator for effecting the movement of the reel (34) for maintaining the established positional relationship.

14. A method according to any of the claims 10 to 13, **characterised in that** the at least one predetermined value comprises a distance between the cutter bar (30) and the reel (34) in the fore and aft directions.

## Patentansprüche

1. Ein Steuersystem (56, 88) für eine Kombination eines Vorsatzgerätes (22) und einer landwirtschaftlichen Erntemaschine (20), mit:
einem Zuführungseinrichtungs-Anhebezylinder (64), der mit dem vorderen Ende der Erntemaschine (20) und einer mit Zuführungseinrichtung (24) verbunden ist, die das Vorsatzgerät (22) trägt und in steuerbarer Weise betreibbar ist, um die Zuführungseinrichtung (24) und das Vorsatzgerät (22) allgemein nach oben und nach unten gegenüber der Erntemaschine (20) zu bewegen;
einem Haspel-Anhebe-Stellglied (60) und einem Haspel-Vorwärts- und Rückwärts-Positions-Stellglied (58), das mit der Haspel (34) des Vorsatzgerätes (22) verbunden ist und in steuerbarer Weise zur Bewegung der Haspel (34) gegenüber dem Vorsatzgerät (22) betreibbar ist;
einem Mähbalken-Vorwärts- und Rückwärts-Positions-Stellglied (62), das mit einem Mähbalken (30) des Vorsatzgerätes (22) verbunden und in steuerbarer Weise zum Bewegen des Mähbalkens (30) allgemein in Vorwärtsrichtung und Rückwärtsrichtung gegenüber dem Vorsatzgerät (22) betreibbar ist;
einem Mähbalken-Vorwärts- und Rückwärts-Positions-Sensor (72), der zur Ausgabe von Information betreibbar ist, die die Vorwärts- und Rückwärts-Position des Mähbalkens (30) darstellt;
zumindest einem Mähbalken-Höhensensor (38), der zum Messen der Höhe eines Mähbalkens (30) des Vorsatzgerätes (22) oberhalb einer Bodenfläche (28) und zur Ausgabe von diese darstellenden Signalen konfiguriert ist; und
zumindest einer Steuereinrichtung (74, 90, 92, 94, 96), die mit dem Haspel-Anhebe-Stellglied (60), dem Haspel-Vorwärts- und Rückwärts-Positions-Stellglied (58), dem Mähbalken-Vorwärts- und Rückwärts-Positions-Stellglied (62) zur Ausgabe von Befehlen an diese und mit dem Mähbalken-Vorwärts- und Rückwärts-Positions-Sensor (72) zum Empfang von Signalen von diesem zu empfangen;
wobei die zumindest eine Steuereinrichtung (74, 90, 92, 94, 96) derart programmiert ist, dass sie:
- automatisch Befehle an das Haspel-Vorwärts- und Rückwärts-Positions-Stellglied (58) abgibt, um Bewegungen des Mähbalkens (30) in der Vorwärts- und Rückwärtsrichtung in Abhängigkeit von Signalen zu folgen, die von dem Mähbalken-Vorwärts- und Rückwärts-Positions-Sensor (72) empfangen werden; und
- automatisch Ausgangsbefehle an das Haspel-Anhebe-Stellglied (60) ausgibt, um die Haspel (34) derart zu bewegen, dass sie Bewegungen des Mähbalkens (30) folgt,
**dadurch gekennzeichnet, dass**:
die zumindest eine Steuereinrichtung (74, 90, 92, 94, 96) weiterhin mit dem Zuführungseinrichtungs-Anhebezylinder (64) verbunden ist, um Befehle an diesen auszugeben, und mit dem zumindest einen Mähbalken-Höhensensor (38) verbunden ist, um Signale von diesem zu empfangen; und
die zumindest eine Steuereinrichtung (74, 90, 92, 94, 96) so programmiert ist, dass sie:
- automatisch Befehle an den Zuführungseinrichtungs-Anhebezylinder (64) zum Bewegen des Vorsatzgerätes nach oben beziehungsweise nach unten ausgibt, wenn die von dem zumindest einen Mähbalken-Höhensensor (38) ausgegebenen Signale eine Bewegung des Mähbalkens (30) nach oben beziehungsweise nach unten über einen vorgegebenen Bereich hinaus darstellen, und
- automatisch Befehle an das Haspel-Anhebe-Stellglied (60) zur Bewegung der Haspel (34) ausgibt, so dass diese Bewegungen des Mähbalkens (30) folgt, wenn die von dem zumindest einen Mähbalken-Höhensensor (38) ausgegebenen Signalen eine Bewegung des Mähbalkens (30) innerhalb des vorgegebenen Bereiches darstellen.

2. Ein Steuersystem nach Anspruch 1, **dadurch gekennzeichnet, dass** es weiterhin zumindest eine Eingabeeinrichtung (76, 78, 80) umfasst, die mit der zumindest einen Steuereinrichtung (74, 90, 92, 94, 96) verbindbar und zur Ausgabe von Fahrer-Eingabebefehlen an die zumindest eine Steuereinrichtung (74, 90, 92, 94, 96) betreibbar ist.

3. Ein Steuersystem nach Anspruch 2, **dadurch gekennzeichnet, dass** die zumindest eine Eingabeeinrichtung (76, 78, 80) eine Eingabeeinrichtung (76) zur Eingabe von Mähbalken-(30)-Vorwärts- und Rückwärts-Positionsbefehlen umfasst.

4. Ein Steuersystem nach einem der vorhergehenden Ansprüche, **dadurch gekennzeichnet, dass** der zumindest eine Mähbalken-Höhensensor (38) ein Element umfasst, das zum Kontakt mit der Bodenfläche (28) konfiguriert und positioniert ist.

5. Ein Steuersystem nach Anspruch 4, **dadurch gekennzeichnet, dass** das für einen Kontakt mit der Bodenfläche (28) konfigurierte Element einen Gleitschuh umfasst.

6. Ein Steuersystem nach einem der vorhergehenden Ansprüche, **dadurch gekennzeichnet, dass** der Mähbalken in eine Biegebetriebsart überführbar ist, in der der Mähbalken (30) gegenüber dem Vorsatzgerät (22) nach oben und nach unten bewegbar ist.

7. Ein Steuersystem nach Anspruch 2 allein oder in Kombination mit irgendeinem der Ansprüche 3 bis 6, **dadurch gekennzeichnet, dass** die zumindest eine Steuereinrichtung (74, 90, 92, 94, 96) weiterhin zur Ausgabe von Befehlen zur automatischen Positionierung des Mähbalkens (30) in zumindest einer vorgegebenen Vorwärts- und Rückwärts-Position und zur automatischen Positionierung der Haspel in zumindest einer vorgegebenen Position bezüglich des Mähbalkens (30) in Abhängigkeit von dem zumindest einen vorgegebenen Eingabebefehl programmiert ist.

8. Ein Steuersystem nach Anspruch 7, **dadurch gekennzeichnet, dass** die zumindest eine Steuereinrichtung (74, 90, 92, 94, 96) so programmiert ist, dass sie
automatisch den Mähbalken (30) und die Haspel (34) in einer ersten vorgegebenen Position in Abhängigkeit von einer ersten vorgegebenen Eingabe positioniert, wobei in dieser ersten vorgegebenen Position der Mähbalken (30) benachbart zu einem vorderen Ende des Vorwärts- und Rückwärts-Bewegungsbereiches des Mähbalkens (30) und der Haspel (34) angeordnet ist und die Haspel (34) benachbart zu einem oberen Ende eines vertikalen Bewegungsbereiches der Haspel angeordnet ist; und
automatisch den Mähbalken (30) und die Haspel (34) auf eine zweite vorgegebene Position in Abhängigkeit von einer zweiten vorgegebenen Eingabe positioniert, wobei in dieser zweiten vorgegebenen Position der Mähbalken (30) in einer Position rückwärts von der ersten vorgegebenen Position des Mähbalkens (30) angeordnet ist, und die Haspel (34) in einer abgesenkten Position gegenüber der ersten vorgegebenen Position der Haspel (34) angeordnet ist.

9. Ein Steuersystem nach irgendeinem der vorhergehenden Ansprüche, **dadurch gekennzeichnet, dass** es weiterhin zumindest einen der folgenden Sensoren (86, 70, 68) umfasst, die mit der zumindest einen Steuereinrichtung (74, 90, 92, 94, 96) zum Empfang von Sgnalen von diesen verbindbar sind:
einen Zuführungseinrichtungs-Anhebe-Positions-Sensor (86), der zur Ausgabe von die Zuführungseinrichtungs-Position darstellender Information betreibbar ist,
einen Haspelanhebe-Positions-Sensor (70), der zur Ausgabe von die vertikale Position der Haspel (34) darstellender Information betreibbar ist;
einen Haspel-Vorwärts- und Rückwärts-Positions-Sensor (68), der zur Ausgabe von die Vorwärts- und Rückwärts-Position der Haspel (34) darstellender Information betreibbar ist.

10. Ein Verfahren zur Steuerung von Positionsbewegungen einer Haspel eines Vorsatzgerätes (22) einer landwirtschaftlichen Maschine (20), **dadurch gekennzeichnet, dass** es die folgenden Schritte umfasst:
Bereitstellen eines Steuersystems (56, 88) gemäß irgendeinem der vorhergehenden Ansprüche;
Positionieren der Haspel (34) in einer ausgewählten Aufwärts- und Abwärts-Position beziehungsweise einer ausgewählten Vorwärts- und Rückwärts-Position, gegenüber dem Vorsatzgerät (22), um eine Positionsbeziehung zwischen der Haspel (34) und dem Mähbalken (30) des Vorsatzgerätes auszubilden;
Überwachen der Bewegungen des Mähbalkens (30) und Feststellen, ob diese Bewegungen zumindest einen vorgegebenen Wert übersteigen, der zur Aufrechterhaltung der festgelegten Positionsbeziehung erforderlich ist; und
falls ja, dann Bestimmen einer Korrekturbewegung der Haspel (34) zur Wiederherstellung der Beziehung und zur Steuerung des Haspel-Vorwärts- und Rückwärts-Positions-Stellgliedes (58) und des Haspel-Anhebe-Stellgliedes (60) zur Ausführung der Korrekturbewegung.

11. Ein Verfahren nach Anspruch 10, **dadurch gekennzeichnet, dass** der Schritt der Überwachung der Bewegungen des Mähbalkens (30) und der Feststellung, ob die Bewegungen zumindest einen vorgegebenen Wert übersteigen, der zur Aufrechterhaltung der ausgebildeten Positionsbeziehung erforderlich ist, weiterhin die Feststellung, ob vertikale Bewegungen des Mähbalkens (30) einen zweiten vorgegebenen Wert übersteigen, umfasst, und falls ja, dann Halten der Position der Haspel (34) und Bestimmen einer Korrekturbewegung des Vorsatzgerätes (22) zur Rückführung des Mähbalkens (30) auf eine Position innerhalb des zweiten vorgegebenen Bereiches.

12. Ein Verfahren nach Anspruch 10 oder 11, bei Bezugnahme auf Anspruch 2, **dadurch gekennzeichnet, dass** es die folgenden zusätzlichen Schritte umfasst:
wenn ein Eingabebefehl zur Bewegung des Mähbalkens (30) empfangen wird, nachfolgendes Bestimmen, ob die befohlene Vorwärts- und Rückwärts-Bewegung des Mähbalkens (30) den Mähbalken (30) über die festgelegte Positionsbeziehung mit der Haspel (34) hinaus bewegt, und
falls ja, dann eine Steuerung des Mähbalken-Vorwärts- und Rückwärts-Positions-Stellgliedes (82) derart, dass lediglich der Mähbalken (30) um einen Betrag bewegt wird, der die festgelegte Positionsbeziehung aufrecht erhält.

13. Ein Verfahren nach Anspruch 10 oder 11, bei Bezugnahme auf Anspruch 2, **dadurch gekennzeichnet, dass** es die folgenden zusätzlichen Schritte umfasst:
wenn ein Eingabebefehl zur Bewegung des Mähbalkens (30) empfangen wird, Feststellen, ob die befohlene Vorwärts- und Rückwärts-Bewegung des Mähbalkens (30) den Mähbalken (30) über die festgelegte Positionsbeziehung mit der Haspel (34) hinaus bewegt, und
falls ja, nachfolgendes Bestimmen einer Bewegung der Haspel (34) zur Aufrechterhaltung der festgelegten Positionsbeziehung, und
Steuern der Mähbalken- (30) Positions-Stellgliedes derart, dass der Mähbalken (30) in Abhängigkeit von dem Eingabebefehl bewegt wird, und
Steuern des Haspel-Positions-Stellgliedes zum Bewirken der Bewegung der Haspel (34) zur Aufrechterhaltung der festgelegten Positionsbeziehung.

14. Ein Verfahren nach einem der Ansprüche 10 bis 13, **dadurch gekennzeichnet, dass** der zumindest eine vorgegebene Wert einen Abstand zwischen dem Mähbalken (30) und der Haspel (34) in den Vorwärts- und Rückwärts-Richtungen umfasst.

## Revendications

1. Système de commande (56, 88) pour une combinaison d'une table de coupe (22) et d'une machine de récolte agricole (20), comprenant :
un vérin de levage de dispositif d'alimentation (64) connecté à l'extrémité avant de la machine de récolte (20) et à un dispositif d'alimentation (24) supportant la table de coupe (22) et pouvant fonctionner de façon commandée pour déplacer le dispositif d'alimentation (24) et la table de coupe (22) généralement vers le haut et vers le bas par rapport à la machine de récolte (20),
un actionneur de levage de rabatteur (60) et un actionneur de positionnement avant et arrière de rabatteur (58) connectés à un rabatteur (34) de la table de coupe (22) et pouvant fonctionner de façon commandée pour déplacer le rabatteur (34) par rapport à la table de coupe (22),
un actionneur de positionnement vers l'avant et vers l'arrière de barre de coupe (62) connecté à une barre de coupe (30) de la table de coupe (22) et pouvant fonctionner de façon commandée pour déplacer la barre de coupe (30) généralement vers l'avant et vers l'arrière par rapport à la table de coupe (22),
un capteur de position vers l'avant et vers l'arrière de barre de coupe (72) fonctionnel pour délivrer des informations indiquant la position vers l'avant et vers l'arrière de la barre de coupe (30),
au moins un capteur de hauteur de barre de coupe (38) configuré pour détecter la hauteur de la barre de coupe (30) de la table de coupe (22) au-dessus d'une surface du sol (28) et délivrer des signaux représentatifs de celle-ci, et
au moins un contrôleur (74, 90, 92, 94, 96) connecté à l'actionneur de levage de rabatteur (60), à l'actionneur de positionnement vers l'avant et vers l'arrière de rabatteur (58) et à l'actionneur de positionnement vers l'avant et vers l'arrière de barre de coupe (62) pour leur délivrer des commandes et connecté au capteur de position vers l'avant et vers l'arrière de barre de coupe (72) pour recevoir des signaux de celui-ci,
le au moins un contrôleur (74, 90, 92, 94, 96) étant programmé de façon à :
- délivrer automatiquement des commandes à l'actionneur (58) de positionnement vers l'avant et vers l'arrière de rabatteur de façon à suivre les déplacements de la barre de coupe (30) dans la direction vers l'avant et vers l'arrière en réponse à des signaux reçus depuis le capteur de position (72) vers l'avant et vers l'arrière de la barre de coupe, et
- délivrer automatiquement des commandes à l'actionneur de levage de rabatteur (60) pour déplacer le rabatteur (34) de façon à suivre les déplacements de la barre de coupe (30),
**caractérisé en ce que** :
le au moins un contrôleur (74, 90, 92, 94, 96) est connecté en plus au vérin de levage du dispositif d'alimentation (64) pour lui délivrer des commandes et à au moins un capteur de hauteur de barre de coupe (38) pour recevoir des signaux de celui-ci, et
le au moins un contrôleur (74, 90, 92, 94, 96) est programmé de façon à :
- délivrer automatiquement des commandes au vérin de levage du dispositif d'alimentation (64) pour déplacer la table de coupe (22) vers le haut ou vers le bas, respectivement, lorsque les signaux émis par le au moins un capteur (38) de hauteur de barre de coupe indiquent un déplacement de la barre de coupe (30) respectif vers le haut ou vers le bas, au delà d'une plage prédéterminée, et
- délivrer automatiquement des commandes à l'actionneur de levage de rabatteur (60) pour déplacer le rabatteur (34) de façon à suivre les déplacements de la barre de coupe (30) lorsque les signaux émis par le au moins un capteur (38) de hauteur de barre de coupe indiquent un déplacement de la barre de coupe (30) dans la plage prédéterminée.

2. Système de commande selon la revendication 1, **caractérisé en ce qu'**il comprend en plus au moins un dispositif d'entrée (76, 78, 80), connectable au au moins un contrôleur (74, 90, 92, 94, 96), fonctionnel pour délivrer des commandes d'entrée par un conducteur au au moins un contrôleur (74, 90, 92, 94, 96).

3. Système de commande selon la revendication 2, **caractérisé en ce que** le au moins un dispositif d'entrée (76, 78, 80) comprend un dispositif d'entrée (76) permettant d'entrer des commandes de position en avant et en arrière de la barre de coupe (30).

4. Système de commande selon l'une quelconque des revendications précédentes, **caractérisé en ce que** le au moins un capteur de hauteur (38) de barre de coupe comprend un élément conçu et positionné pour entrer en contact avec la surface du sol (28).

5. Système de commande selon la revendication 4, **caractérisé en ce que** l'élément conçu pour entrer en contact avec la surface du sol (28) comprend un patin.

6. Système de commande selon l'une quelconque des revendications précédentes, **caractérisé en ce que** la barre de coupe peut être disposée dans un mode flex dans lequel la barre de coupe (30) peut être déplacée vers le haut et vers le bas par rapport à la table de coupe (22).

7. Système de commande selon la revendication 2 seule ou combinée avec l'une quelconque des revendications 3 à 6, **caractérisé en ce que** le au moins un contrôleur (74, 90, 92, 94, 96) est programmé en plus pour délivrer des commandes pour positionner automatiquement la barre de coupe (30) dans au moins une position prédéterminée vers l'avant et vers l'arrière et pour positionner automatiquement le rabatteur (34) dans au moins une position prédéterminée par rapport à la barre de coupe (30) en réponse à la au moins une commande d'entrée prédéterminée.

8. Système de commande selon la revendication 7, **caractérisé en ce que** le au moins un contrôleur (74, 90, 92, 94, 96) est programmé :
pour positionner automatiquement la barre de coupe (30) et le rabatteur (34) dans une première position prédéterminée en réponse à une première entrée prédéterminée, la barre de coupe (30), dans cette première position prédéterminée, étant positionnée à côté d'une extrémité avant d'une amplitude de déplacement d'avant en arrière de la barre de coupe (30) et le rabatteur (34) étant positionné à côté d'une extrémité supérieure d'une amplitude verticale de déplacement du rabatteur, et
pour positionner automatiquement la barre de coupe (30) et le rabatteur (34) dans une seconde position prédéterminée en réponse à une seconde entrée prédéterminée, la barre de coupe (30), dans cette seconde position prédéterminée, étant positionnée dans une position à l'arrière de la première position prédéterminée de la barre de coupe (30) et le rabatteur (34) étant positionné dans une position abaissée par rapport à la première position prédéterminée du rabatteur (34).

9. Système de commande selon l'une quelconque des revendications précédentes, **caractérisé en ce qu'**il comprend en plus au moins un des capteurs suivants (86, 70, 68), connectables au au moins un contrôleur (74, 90, 92, 94, 96,) pour lui délivrer des signaux de ceux-ci :
un capteur de position de levage (86) de dispositif d'alimentation fonctionnel pour délivrer des informations indiquant la position du dispositif d'alimentation,
un capteur de position de levage de rabatteur (70) fonctionnel pour délivrer des informations indiquant la position verticale du rabatteur (34),
un capteur de position avant et arrière de rabatteur (68) fonctionnel pour délivrer des informations indiquant la position avant et arrière du rabatteur (34).

10. Procédé pour commander les déplacements de positionnement d'un rabatteur (34) d'une table de coupe (22) d'une machine de récolte agricole (20), **caractérisé en ce qu'**il comprend les étapes consistant à :
fournir un système de commande (56, 88) selon l'une quelconque des revendications précédentes,
positionner le rabatteur (34) dans une position sélectionnée vers le haut ou vers le bas et une position sélectionnée vers l'avant ou vers l'arrière, respectivement, par rapport à la table de coupe (22) de façon à établir une relation de position entre le rabatteur (34) et une barre de coupe (30) de la table de coupe (22),
surveiller les déplacements de la barre de coupe (30) et déterminer si les déplacements dépassent au moins une valeur prédéterminée requise pour maintenir la relation de position établie, et
si oui, déterminer ensuite un déplacement correctif du rabatteur (34) pour rétablir la relation, et commander l'actionneur de positionnement vers l'avant et vers l'arrière du rabatteur (58) et l'actionneur de levage du rabatteur (60) pour exécuter le déplacement correctif.

11. Procédé selon la revendication 10, **caractérisé en ce que** l'étape de surveillance des déplacements de la barre de coupe (30) et de détermination si les déplacements dépassent au moins une valeur prédéterminée requise pour maintenir la relation de position établie consiste en plus à déterminer si les déplacements verticaux de la barre de coupe (30) dépassent une seconde valeur prédéterminée, et si oui, maintenir ensuite la position du rabatteur (34) et déterminer un déplacement correctif de la table de coupe (22) pour remettre la barre de coupe (30) à une position comprise dans la seconde plage prédéterminée.

12. Procédé selon la revendication 10 ou 11, lorsqu'elle est rattachée à la revendication 2, **caractérisé en ce qu'**il comprend les étapes supplémentaires consistant à :
si une commande d'entrée pour déplacer la barre de coupe (30) est reçue, déterminer ensuite si le déplacement commandé vers l'avant ou vers l'arrière de la barre de coupe (30) déplacera la barre de coupe (30) au-delà de la relation de position établie avec le rabatteur (34), et
si oui, commander ensuite l'actionneur de positionnement vers l'avant et vers l'arrière de la barre de coupe (62) de façon à déplacer la barre de coupe (30) seulement d'une amplitude qui maintient la relation de position établie.

13. Procédé selon la revendication 10 ou 11 lorsqu'elle est rattachée à la revendication 2, **caractérisé en ce qu'**il comprend les étapes supplémentaires consistant à :
si une commande d'entrée pour déplacer la barre de coupe (30) est reçue, déterminer ensuite si le déplacement commandé vers l'avant ou vers l'arrière de la barre de coupe (30) déplacera la barre de coupe (30) au-delà de la relation de position établie avec le rabatteur (34), et
si oui, déterminer ensuite un déplacement du rabatteur (34) qui maintienne la relation de position établie, et
commander l'actionneur de positionnement de la barre de coupe (30) de façon à déplacer la barre de coupe (30) en réponse à la commande d'entrée, et
commander l'actionneur de positionnement du rabatteur pour exécuter le déplacement du rabatteur (34) de façon à maintenir la relation de position établie.

14. Procédé selon l'une quelconque des revendications 10 à 13, **caractérisé en ce que** la au moins une valeur prédéterminée comprend une distance entre la barre de coupe (30) et le rabatteur (34) dans les directions avant et arrière.
